# EUROPEAN PATENT APPLICATION

(11) **EP 4 524 749 A1**
(43) Date of publication of application: **19.03.2025**
(21) Application number: 23810864.1
(22) Date of filing: 12.05.2023
(51) Int. Cl.: G06F 11/30

(54) **CONTROL APPARATUS, CONTROL METHOD, AND RELATED DEVICE**

(30) Priority: 26.05.2022 CN 202210582276
(71) Applicant: Huawei Technologies Co., Ltd., Shenzhen, Guangdong 518129 (CN)
(72) Inventor: MU, Hongtao, Shenzhen, Guangdong 518129 (CN); LIU, Yu, Shenzhen, Guangdong 518129 (CN); LIU, Kai, Shenzhen, Guangdong 518129 (CN); LIU, Boyu, Shenzhen, Guangdong 518129 (CN); QIN, Jieyu, Shenzhen, Guangdong 518129 (CN)
(74) Representative: Thun, Clemens
(86) International application number: PCT/CN2023/093900
(87) International publication number: WO 2023/226791

(57) **Abstract**

This application discloses a control apparatus, a control method, and a related device. The control apparatus includes a real-time monitor and a control unit. The control apparatus is coupled to N processor cores, and N is an integer greater than or equal to 1. The RTM is configured to extract one or more pieces of status information of each of the N processor cores, the one or more pieces of status information represent a performance status of a corresponding processor core executing a thread, and the one or more pieces of status information correspond to a type of the thread. The control unit is configured to: obtain the one or more pieces of status information of each processor core from the RTM; and adjust, based on the one or more pieces of status information of each processor core, a quality of service priority of at least one of the N processor cores. This application can be used to improve flexibility and processing efficiency of a multi-core processor.

## Description

This application claims priority to Chinese Patent Application No. 202210582276.X, filed with the China National Intellectual Property Administration on May 26, 2022 and entitled "CONTROL APPARATUS, CONTROL METHOD, AND RELATED DEVICE", which is incorporated herein by reference in its entirety.

### TECHNICAL FIELD

This application relates to the field of processor technologies, and in particular, to a control apparatus, a control method, and a related device.

### BACKGROUND

With continuous research and development in recent years, a multi-core architecture represented by a multi-core processor gradually replaces a single-core processor as a main way to improve processor performance. The multi-core processor integrates multiple processor cores in one chip, and these processor cores have same or different functions and structures, and are integrated in the same chip in an effective manner.

Currently, an application scenario of the multi-core processor is more complex. Behaviors of a same processor core in different systems on chip (Systems on chip, SoCs) or in a same SoC but in different application scenarios differ greatly, and it is difficult to implement precise control by representing performance statuses of the processor cores with a unified and fixed characteristic behavior, to meet execution performance of a mission-critical task. Therefore, providing a control mechanism for flexibly controlling each processor core is an urgent problem to be resolved.

### SUMMARY

Embodiments of this application provide a control apparatus, a control method, and a related device, to reduce performance losses of a multi-core processor.

According to a first aspect, an embodiment of this application provides a control apparatus, including a real-time monitor (Real-Time Monitor, RTM) and a control unit. The control apparatus is coupled to N processor cores, and N is an integer greater than or equal to 1. The RTM is configured to extract one or more pieces of status information of each of the N processor cores, the one or more pieces of status information represent a performance status of a corresponding processor core executing a thread, and the one or more pieces of status information correspond to a type of the thread. The control unit is configured to: obtain the one or more pieces of status information of each processor core from the RTM; and adjust, based on the one or more pieces of status information of each processor core, a quality of service (Quality of Service, QoS) priority of at least one of the N processor cores.

Embodiments of this application provide a control apparatus, specifically including hardware and software designs. From a perspective of hardware, in embodiments of this application, the control unit controls resources of all processor cores in real time. From a perspective of software, the RTM extracts the one or more pieces of status information of each processor core in the multiple processor cores in real time, the one or more pieces of status information may represent the performance status of the thread executed by the corresponding processor core, and the one or more pieces of status information correspond to the type of the thread. The control unit obtains the one or more pieces of status information of each processor core from the RTM, and adjusts, based on the one or more pieces of status information of each processor core, a resource, for example, the QoS priority, of at least one of the multiple processor cores. That is, in an overall design architecture of the foregoing control apparatus, the control unit may adjust the resource of the at least one processor core based on real-time status information of the thread executed by each processor core, so that resources of each processor core can be flexibly controlled, better system resource allocation can be achieved, and performance losses of a multi-core processor are reduced.

In a possible implementation, the control unit is further configured to adjust bandwidths of some or all of the N processor cores based on an adjusted QoS priority. In embodiments of this application, further, the control unit may further adjust bandwidths of some or all of the multiple processor cores based on the adjusted QoS priority. It may be understood that, when the control unit determines, based on the one or more pieces of status information of the processor core, that performance of the processor core is not met, the control unit may first adjust the QoS priority of the processor core, and continue to adjust the bandwidth of the processor core based on the adjusted QoS priority when the performance of the processor core is still not met. For example, for a processor core that executes a real-time thread, the RTM extracts one or more pieces of real-time-related status information of the thread executed by the processor core. When determining, based on the one or more pieces of status information, that the execution real-time performance of the thread is not met, the control unit first adjusts the QoS priority of the processor core. When the execution real-time performance of the thread is still not met based on the adjusted QoS priority and based on one or more pieces of new status information, the control unit may continue to adjust the bandwidth of the processor core, and adjustment is performed multiple times, so that resource allocation of each processor core can be flexibly controlled, better system resource allocation can be achieved, and performance losses of a multi-core processor can be reduced.

In a possible implementation, the RTM is configured to: determine M pieces of performance monitoring information of the corresponding processor core, where the M pieces of performance monitoring information represent the performance status of the corresponding processor core executing the thread, and M is an integer greater than or equal to 1; and extract the one or more pieces of status information from the M pieces of performance monitoring information according to a detection strategy. The RTM includes a register. The register is configured to store the one or more pieces of status information. In embodiments of this application, the RTM may determine the performance status of the thread executed by the corresponding processor core to obtain the M pieces of performance monitoring information, and then extract, according to the detection strategy, the one or more pieces of status information about the type of the thread from the M pieces of performance monitoring information, so that the control unit obtains the one or more pieces of status information corresponding to the thread executed by each processor core. Optionally, the RTM includes the register that may store the one or more pieces of status information, so that the control unit obtains, from the register, the one or more pieces of status information corresponding to the thread executed by each processor core.

In a possible implementation, the type of the thread includes a front-end-bound ((front end, FE) bound) type, a compute-bound (compute bound) type, and a memory-bound (memory bound) type. The RTM is specifically configured to: for a thread of a branching type, extract performance monitoring information of a branch prediction unit of the corresponding processor core from the M pieces of performance monitoring information; or for a thread of a computation type, extract period monitoring information of a computation unit of the corresponding processor core from the M pieces of performance monitoring information; or for a thread of a memory access type, extract information of various hierarchies of caches and an external memory of the corresponding processor core from the M pieces of performance monitoring information. In embodiments of this application, the RTM extracts, from the M pieces of performance monitoring information according to the detection strategy, the one or more pieces of status information about the type of the thread. It may be understood that different detection strategies are used for different types of the thread. For example, the type of the thread includes the front-end-bound type, the compute-bound type, the memory-bound type, and the like. If the type of the thread is the branching type, the RTM may extract the performance monitoring information of the branch prediction unit from the M pieces of performance monitoring information as one or more pieces of status information corresponding to the thread. If the type of the thread is the computation type, the RTM may extract the period monitoring information of the computation unit of the corresponding processor core from the M pieces of performance monitoring information as one or more pieces of status information corresponding to the thread. If the type of the thread is the memory access type, the RTM may extract the information of the various hierarchies of caches and the external memory of the corresponding processor core from the M pieces of performance monitoring information as one or more pieces of status information corresponding to the thread. Different detection strategies are used based on different types of the thread, so that accuracy of adjusting a resource of a processor core by the control unit can be improved, better system resource allocation can be achieved, and a performance loss of a multi-core processor can be reduced.

In a possible implementation, the control unit is specifically configured to: obtain the one or more pieces of status information of the corresponding processor core from the register; determine, according to a preset calculation rule and the one or more pieces of status information, a performance indicator corresponding to the thread; and adjust the QoS priority of the at least one of the N processor cores based on the performance indicator. In embodiments of this application, after the control unit obtains the one or more pieces of status information from the register of the RTM, the control unit may calculate, according to the preset calculation rule, the one or more pieces of status information to obtain the performance indicator corresponding to the thread, and adjust the resource of the at least one of the multiple processor cores based on the performance indicator. The resource of the at least one of the multiple processor cores is adjusted based on the performance indicator, so that resource allocation of each processor core can be flexibly controlled, better system resource allocation can be achieved, and performance losses of a multi-core processor can be reduced.

In a possible implementation, the apparatus further includes a shared cache unit, where the shared cache unit includes a priority mapping circuit. The shared cache unit is configured to store one or more threads of each processor core; and the control unit is specifically configured to: when the performance indicator is greater than or equal to a first threshold, send a first signal to the priority mapping circuit, where the first signal is used to adjust a QoS priority of the thread corresponding to the performance indicator from a first QoS priority to a second QoS priority, and the second QoS priority is higher than the first QoS priority. In embodiments of this application, multiple processor cores may share a resource off core, and the resource off core includes one or more of a memory management unit, a cache, and a memory. An example in which the resource off core is the cache is used for descriptions. That is, the control apparatus may further include the shared cache unit, configured to store one or more threads of each processor core. The shared cache unit may include the priority mapping circuit. The control unit adjusts the QoS priority of the at least one of the multiple processor cores based on the one or more pieces of status information of each processor core. In a possible implementation, when the performance indicator obtained based on the one or more pieces of status information is greater than or equal to the first threshold, the control unit may send, to the priority mapping circuit, the signal used to improve the QoS priority of the thread corresponding to the performance indicator, so that the QoS priority of the processor core can be adjusted, resource allocation of each processor core can be flexibly controlled, better system resource allocation can be achieved, and performance losses of a multi-core processor are reduced.

In a possible implementation, each processor core includes a limiting unit. The control unit is specifically configured to: when a performance indicator is greater than or equal to a second threshold, send, based on the adjusted second QoS priority, a second signal to a limiting unit of a processor core for a thread corresponding to the performance indicator, where the second signal is used to adjust a bandwidth of the processor core that executes the thread corresponding to the performance indicator from a first bandwidth to a second bandwidth, the second bandwidth is greater than the first bandwidth, the second signal includes limiting duration and a limiting duty ratio, and the second threshold is greater than the first threshold. In embodiments of this application, each processor core may include the limiting unit. The control unit adjusts bandwidths of some or all of the processor cores in the N processor cores based on the adjusted QoS priority. In a possible implementation, one or more pieces of new status information is obtained based on the adjusted QoS priority, and when a performance indicator obtained based on the one or more pieces of new status information is greater than or equal to a second threshold, the control unit may send, to a limiting unit of a processor core for a thread corresponding to the performance indicator, a signal used to increase the bandwidth of the corresponding processor core, so that a bandwidth of the processor core can be adjusted, resource allocation of each processor core can be flexibly controlled, better system resource allocation can be achieved, and performance losses of a multi-core processor are reduced.

In a possible implementation, the control unit is further configured to: when the performance indicator is less than the first threshold, send a third signal to the priority mapping circuit, where the third signal is used to adjust the QoS priority of the thread corresponding to the performance indicator from the second QoS priority to the first QoS priority. In embodiments of this application, when the performance indicator is less than the first threshold, the control unit may further send, to the priority mapping circuit, the signal used to reduce the QoS priority of the thread corresponding to the performance indicator. For example, the QoS priority of the thread may be reduced from the second QoS priority to the first QoS priority, that is, reduced to the previous QoS priority, or may be understood as the original QoS priority. The control unit allocates a QoS priority to a processor core according to a performance indicator as required. For example, when a processor core executes a thread to meet performance, the increased QoS priority is reduced back to an original QoS priority, so that a waste of a redundant resource can be reduced, resource allocation of each processor core can be flexibly controlled, better system resource allocation can be achieved, and performance losses of a multi-core processor can be reduced.

In a possible implementation, the control unit is further configured to: when the performance indicator is less than the second threshold, send a fourth signal to the limiting unit of the processor core for the thread corresponding to the performance indicator, where the fourth signal is used to adjust the bandwidth of the processor core that executes the thread corresponding to the performance indicator from the second bandwidth to the first bandwidth. In embodiments of this application, when the performance indicator is less than the second threshold, the control unit may further send, to the limiting unit, the signal used to reduce the bandwidth of the corresponding processor core, for example, may reduce the bandwidth of the corresponding processor core from the second bandwidth to the first bandwidth, that is, reduce the bandwidth to the previous bandwidth. The control unit allocates the bandwidth to the processor core based on the performance indicator. For example, when the processor core executes a thread to meet performance, the increased bandwidth is reduced back to the previous bandwidth, so that a waste of a redundant bandwidth can be reduced, resource allocation of each processor core can be flexibly controlled, better system resource allocation can be achieved, and performance losses of a multi-core processor can be reduced.

According to a second aspect, this application provides a control method, applied to a control apparatus, where the control apparatus includes an RTM and a control unit. The control apparatus is coupled to N processor cores, and N is an integer greater than or equal to 1. The method includes: The RTM extracts one or more pieces of status information of each of the N processor cores, where the one or more pieces of status information represent a performance status of a corresponding processor core executing a thread, and the one or more pieces of status information correspond to a type of the thread. The control unit obtains the one or more pieces of status information of each processor core from the RTM; and adjusts a QoS priority of at least one of the N processor cores based on the one or more pieces of status information of each processor core.

In a possible implementation, the method further includes: The control unit adjusts bandwidths of some or all of the N processor cores based on an adjusted QoS priority.

In a possible implementation, that the RTM extracts the one or more pieces of status information of each of the N processor cores includes: The RTM determines M pieces of performance monitoring information of the corresponding processor core, where the M pieces of performance monitoring information represent the performance status of the corresponding processor core executing the thread, and M is an integer greater than or equal to 1; and extracts the one or more pieces of status information from the M pieces of performance monitoring information according to a detection strategy. The RTM includes a register. The method further includes: The register stores the one or more pieces of status information.

In a possible implementation, the type of the thread includes a front-end-bound type, a compute-bound type, and a memory-bound type; and that the RTM extracts the one or more pieces of status information from the M pieces of performance monitoring information according to the detection strategy includes: For a thread of a branching type, the RTM extracts performance monitoring information of a branch prediction unit of the corresponding processor core from the M pieces of performance monitoring information; or for a thread of a computation type, the RTM extracts period monitoring information of a computation unit of the corresponding processor core from the M pieces of performance monitoring information; or for a thread of a memory access type, the RTM extracts information of various hierarchies of caches and an external memory of the corresponding processor core from the M pieces of performance monitoring information.

In a possible implementation, the method further includes: The control unit obtains the one or more pieces of status information of the corresponding processor core from the register; determines, according to a preset calculation rule and the one or more pieces of status information, a performance indicator corresponding to the thread; and adjusts the QoS priority of the at least one of the N processor cores based on the performance indicator.

In a possible implementation, the apparatus further includes a shared cache unit, where the shared cache unit includes a priority mapping circuit. The method further includes: The shared cache unit stores one or more threads of each processor core; and that the control unit adjusts the QoS priority of the at least one of the N processor cores includes: When the performance indicator is greater than or equal to a first threshold, the control unit sends a first signal to the priority mapping circuit, where the first signal is used to adjust a QoS priority of the thread corresponding to the performance indicator from a first QoS priority to a second QoS priority, and the second QoS priority is higher than the first QoS priority.

In a possible implementation, each processor core includes a limiting unit. The method further includes: When a performance indicator is greater than or equal to a second threshold, the control unit sends, based on the adjusted second QoS priority, a second signal to a limiting unit of a processor core for a thread corresponding to the performance indicator, where the second signal is used to adjust a bandwidth of the processor core that executes the thread corresponding to the performance indicator from a first bandwidth to a second bandwidth, the second bandwidth is greater than the first bandwidth, the second signal includes limiting duration and a limiting duty ratio, and the second threshold is greater than the first threshold.

In a possible implementation, the method further includes: When the performance indicator is less than the first threshold, the control unit sends a third signal to the priority mapping circuit, where the third signal is used to adjust the QoS priority of the thread corresponding to the performance indicator from the second QoS priority to the first QoS priority.

In a possible implementation, the method further includes: When the performance indicator is less than the second threshold, the control unit sends a fourth signal to the limiting unit of the processor core for the thread corresponding to the performance indicator, where the fourth signal is used to adjust the bandwidth of the processor core that executes the thread corresponding to the performance indicator from the second bandwidth to the first bandwidth.

According to a third aspect, this application provides a semiconductor chip, and the semiconductor chip may include the control apparatus provided in any implementation of the first aspect.

According to a fourth aspect, this application provides a SoC chip, where the SoC chip includes the control apparatus provided in any implementation of the first aspect. The SoC chip may include a chip, or may include a chip and another discrete device.

According to a fifth aspect, this application provides a chip system, where the chip system includes the control apparatus provided in any implementation of the first aspect. In a possible design, the chip system further includes a memory, and the memory is configured to store necessary or related program instructions and data in a running process of the control apparatus. The chip system may include a chip, or may include a chip and another discrete device.

According to a sixth aspect, this application provides a processing apparatus. The processing apparatus has a function of implementing a control method of any control apparatus according to the first aspect. The function may be implemented by hardware, or may be implemented by hardware executing corresponding software. The hardware or the software includes one or more modules corresponding to the function.

According to a seventh aspect, this application provides a terminal, where the terminal includes a control apparatus, and the control apparatus is the control apparatus provided in any implementation of the first aspect. The terminal may further include a memory, and the memory is configured to be coupled to the control apparatus, and stores program instructions and data that are necessary for the terminal. The terminal may further include a communication interface, used by the terminal to communicate with another device or a communication network.

According to an eighth aspect, this application provides a computer-readable storage medium, where the computer-readable storage medium stores a computer program, and when the computer program is executed by a control apparatus, a procedure of the control method according to any implementation of the second aspect is implemented.

According to a ninth aspect, an embodiment of this application provides a computer program, where the computer program includes instructions, and when the computer program is executed by a control apparatus, the control apparatus is enabled to perform the control method procedure according to any one of the second aspect.

### BRIEF DESCRIPTION OF DRAWINGS

FIG. 1 is a diagram of a structure of a control apparatus according to an embodiment of this application;
FIG. 2 is a diagram of another structure of a control apparatus according to an embodiment of this application;
FIG. 3 is a diagram of RTM processing according to an embodiment of this application;
FIG. 4 is a diagram of responding to a limiting signal by a processor core according to an embodiment of this application;
FIG. 5 is a diagram of a structure of a system architecture according to an embodiment of this application;
FIG. 6 is a schematic flowchart of a control method according to an embodiment of this application; and
FIG. 7 is a schematic flowchart of another control method according to an embodiment of this application.

### DESCRIPTION OF EMBODIMENTS

The following describes embodiments of this application with reference to accompanying drawings in embodiments of this application. In the specification, claims, and accompanying drawings of this application, terms "first", "second", "third", "fourth" and the like are intended to distinguish between different objects but do not indicate a particular order. In addition, terms "including", "having", or any other variant thereof, are intended to cover a non-exclusive inclusion. For example, processes, methods, systems, products, or devices that include a series of steps or units are not limited to the listed steps or units, but optionally further includes an unlisted step or unit, or optionally further includes another inherent step or unit of these processes, methods, products, or devices. An "embodiment" mentioned in the specification indicates that a particular feature, structure, or characteristic described with reference to this embodiment may be included in at least one embodiment of this application. The phrase appearing in various positions in this specification may not necessarily refer to a same embodiment, and is not an independent or optional embodiment exclusive from another embodiment. It is explicitly and implicitly understood by persons skilled in the art that the embodiments described in the specification may be combined with another embodiment.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside in a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network, for example, the internet interacting with other systems by using the signal).

Some terms in this application are first described, to help persons skilled in the art have a better understanding.
(1) For a multi-core processor, due to a limitation of a semiconductor technology, it is no longer practical to manufacture a high-performance single-core processor. In addition, there is no solution to power consumption and heat dissipation problems brought by the high-performance single-core processor. In this case, more semiconductor manufacturers tend to manufacture the multi-core processor with lower power consumption and balanced performance to improve comprehensive performance of the processor. Multi-core processors can be classified into homogeneous multi-core processors and heterogeneous multi-core processors depending on whether core architectures are the same.
(2) A process (process) is usually defined as execution of a program. The process may be considered as an independent program with complete data space and code space in a memory. Data and variables owned by the process belong only to the process.
(3) A thread is a program that runs independently in a process. In other words, the thread exists in the process. One process includes one or more threads. The threads share same code and same global data, but each thread has its own stack. Since there is one stack per thread, each thread has private local variables. Because all threads share the same code and the same global data, the threads are closer than processes, tend to interact more closely than the individual processes, and interact more easily between the threads because the threads themselves have some shared memory for communication: global data of the process.
(4) Main functions of a memory management unit (Memory Management Unit, MMU) are translating a virtual address (virtual address) to a physical address (physical address), controlling access permission, and setting a buffer of virtual storage space.
(5) An integrated circuit (Integrated Circuit, IC) is a microelectronic device or component. Elements such as a transistor, a resistor, a capacitor, and an inductor required in a circuit are interconnected with cables based on a specific process, and are made on a small or several small semiconductor wafers or dielectric substrates for package in a tube shell to form a micro structure with required circuit functions. That is, an IC chip is a chip formed by placing an integrated circuit formed by a large quantity of microelectronic components (a transistor, a resistor, a capacitor, and the like) on a plastic base.
(6) Computer instructions are instructions and commands that instruct a machine to operate. A program is a series of instructions arranged in a given sequence. A process of executing the program is a working process of a computer.

First, for ease of understanding embodiments of this application, a technical problem specifically to be resolved in this application is further proposed and analyzed.

Currently, an application scenario of the multi-core processor is more complex. Same processor cores are in different SoCs, or are in different application scenarios in same SoCs, and behavior difference is large. For example, a same processor core executes different critical tasks, and load behaviors are different. Some are front-end tasks (for example, front-end bound), and some are back-end tasks (for example, back-end bound). For another example, a processor core that executes a non-critical task interferes with a processor core that executes a critical task, therefore, it is difficult to implement precise flow control by representing performance statuses of processor cores with a unified and fixed characteristic behavior to.

Currently, there are a plurality of technical solutions for implementing flow control on the multi-core processor. The following lists two examples.

Solution 1: Technical solution of quality of service (Quality of Service, QoS)

In this solution, different QoS may be set, and the multi-core processor preferentially executes a request with high QoS. There may be the following several possible implementations for setting different QoS values. Manner 1: Different QoS values are set for different processor cores, for example, high QoS is set for a primary processor, and low QoS is set for a secondary processor. Manner 2: Different QoS is set for different types of requests in a same processor core, for example, high QoS is set for an instruction fetch request/memory management unit (Memory Management Unit, MMU) request, and low QoS is set for data prefetching (prefetch). Manner 3: Different low QoS is set for different software threads, for example, high QoS is set for a real-time thread, and low QoS is set for a non-real-time thread.

A disadvantage of Solution 1 is as follows: QoS setting is static and fixed. For example, QoS of different processor cores, request types, and software threads is fixed, and dynamic adjustment is not performed because performance is not met, and large performance losses exist.

Solution 2: Technical solution of closed-loop flow control

In this solution, the processor core determines, based on a performance status of executing a task, whether to continue to receive a task request message. For example, when a to-be-executed task request message stored in a buffer exceeds a specific threshold, the buffer may send an instruction of rejecting receiving the task request message to the processor core. After the processor core receives the instruction, the processor core stops sending the task request message to the buffer, to implement closed-loop flow control.

A disadvantage of Solution 2 is as follows: This solution improves a problem of fixed QoS setting, although the processor core controls sending of the task request message according to a feedback instruction, dynamic adjustment cannot be performed between multiple processor cores, and large performance losses exist.

In conclusion, the technical defects mainly include the following aspects.
1. How to accurately sense a performance status of each processor core?
2. How to ensure that small performance losses are achieved when performance requirements of multiple processor cores are met?

Therefore, this application needs to resolve the following technical problems:
1. Accurately sense the performance status of each processor core; 2. Select, based on different service scenarios, performance status information to determine whether to trigger a control action, to reduce performance losses; and 3. The processing unit implements flexible and configurable control of each processor core.

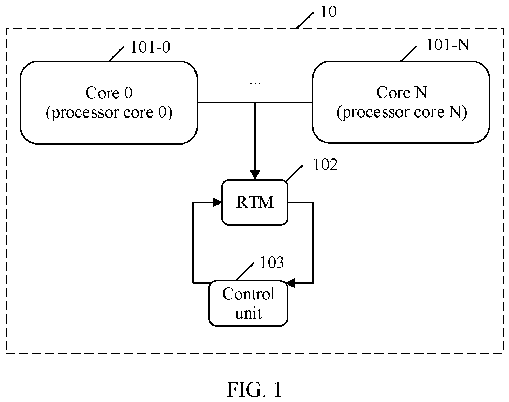

Based on the foregoing descriptions, this application provides a control apparatus. FIG. 1 is a diagram of a structure of a control apparatus according to an embodiment of this application. The control apparatus 10 may be located in any electronic device, for example, a computer, a computer, a mobile phone, or a tablet. The control apparatus 10 can be used in fields that support various scenario requirements, such as driving assistance and automatic driving. The control apparatus 10 may be specifically a chip, a chip set, or a circuit board on which a chip or a chip set is mounted. The chip, the chip set, or the circuit board on which the chip or the chip set is mounted may work when driven by necessary software.

The control apparatus 10 may include an RTM 102 and a control unit 103. That the control apparatus 10 is coupled to multiple processor cores 101 may be understood as that the RTM 102 and the control unit 103 are separately coupled to the multiple processor cores. In FIG. 1, an example in which the multiple processor cores in embodiments of this application are N processor cores 101 is used for descriptions, and the processor cores include a processor core 1 (Core 1), ..., and a processor core N (Core N). Optionally, the N processor cores 101, the RTM 102, and the control unit 103 may be located in one IC, or the N processor cores 101 are located in one IC, and some or all of the RTM 102 and the control unit 103 are located in another IC. This is not specifically limited in embodiments of this application. It may be understood that the N processor cores 101, the RTM 102, and the control unit 103 may be coupled and communicate with each other through a bus or in another manner. A connection relationship shown in FIG. 1 does not constitute a limitation on coupling relationships between the N processor cores 101, the RTM 102, and the control unit 103. Optionally, the N processor cores 101 may be homogeneous or heterogeneous, or may be partially homogeneous or partially heterogeneous. This is not specifically limited in embodiments of this application. The processor core may integrate a general purpose processor (Central Processing Unit, CPU), and each CPU may execute different types of tasks. Optionally, the control unit 103 may be a micro processing unit (Micro Controller Unit, MCU) or the like.

Based on software and hardware architectures of the control apparatus in FIG. 1, in this embodiment of this application, functions specifically implemented by the control apparatus 10 may include the following.

Each of the N processor cores 101 is configured to execute one or more threads.

The RTM is configured to extract one or more pieces of status information of each processor core, where the one or more pieces of status information represent a performance status of a thread executed by a corresponding processor core, and the one or more pieces of status information correspond to a type of the thread. For example, the type of the thread includes a front-end-bound type, a compute-bound type, and a memory-bound type. For example, for a thread of a branching type, the one or more pieces of status information may include performance monitoring information of a branch prediction unit of a corresponding processor core; for another example, for a thread of a computation type, the one or more pieces of status information may include period monitoring information of a computation unit of a corresponding processor core; or for still another example, for a thread of a memory access type, the one or more pieces of status information may include information of various hierarchies of caches and an external memory of a corresponding processor core. Optionally, threads of same types may belong to different types at different moments. The RTM may adjust an extraction strategy based on a change of a type of a thread, and extract the one or more pieces of status information of each processor core in a refined manner. In an embodiment, the type of the thread corresponds to a real-time type, and one or more pieces of status information corresponding to the thread may include a bandwidth, a latency, a cache error rate (cache miss-rate), a branch prediction error rate (branch miss-prediction), and the like.

The control unit is configured to: obtain the one or more pieces of status information of each processor core from the RTM; and adjust, based on the one or more pieces of status information of each processor core, a quality of service QoS priority of at least one of the N processor cores.

Optionally, the control unit is further configured to adjust bandwidths of some or all of the N processor cores based on an adjusted QoS priority.

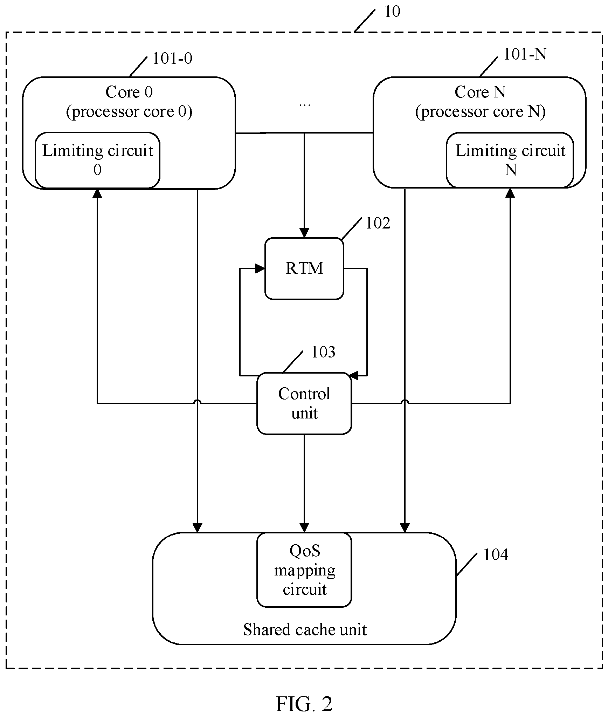

FIG. 2 is a diagram of another structure of a control apparatus according to an embodiment of this application. FIG. 2 is an optimization of the control apparatus shown in FIG. 1. As shown in FIG. 2, the apparatus may further include a shared cache unit 104. The shared cache unit 104 may be understood as a unit in which the N processor cores 101 share a cache, for example, a cache (cache). The shared cache unit 104 may be coupled to the N processor cores 101. The shared cache unit 104 may include a QoS mapping circuit. The N processor cores 101 include limiting circuits: a limiting circuit 1, ..., and a limiting circuit N. Optionally, the N processor cores 101, the RTM 102, the control unit 103, and the shared cache unit 104 may be located in one IC, or the N processor cores 101 are located in one IC, and some or all of the RTM 102, the control unit 103, and the shared cache unit 104 are located in another IC. This is not specifically limited in embodiments of this application. It may be understood that the N processor cores 101 may be coupled and communicate with the RTM 102, the control unit 103, and the shared cache unit 104 through a bus or in another manner. A connection relationship shown in FIG. 2 does not constitute a limitation on a coupling relationship between the N processor cores 101 and the RTM 102, the control unit 103, and the shared cache unit 104.

Based on software and hardware architectures of the control apparatus in FIG. 2, in this embodiment of this application, functions specifically implemented by the control apparatus 10 may include the following.

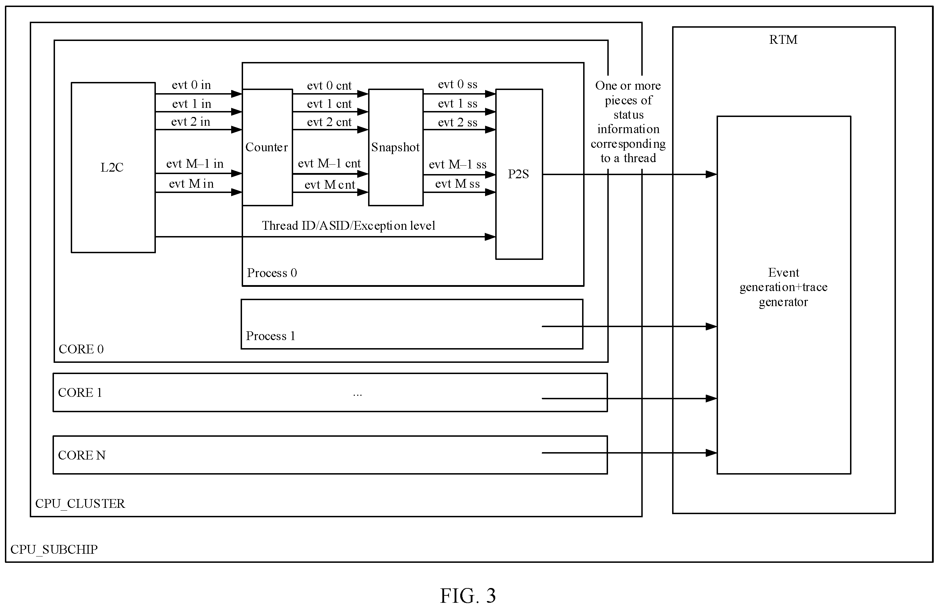

Each of the N processor cores 101 is configured to execute one or more threads. The RTM may be configured to determine M pieces of performance monitoring information of a corresponding processor core, where the M pieces of performance monitoring information represent the performance status of the corresponding processor core executing the thread, and M is an integer greater than or equal to 1. For example, it is assumed that threads processed by the processor core 0 include a thread 0 and a thread 1, the RTM may determine M pieces of performance monitoring information of the thread 0 executed by the processor core 0, and determine M pieces of performance monitoring information of the thread 1 executed by the processor core 0. After determining the M pieces of performance monitoring information of a thread corresponding to a processor core, the RTM may extract one or more pieces of status information from the M pieces of performance monitoring information according to a detection strategy. Quantities of one or more pieces of status information corresponding to different threads may be the same, or may be different. This is not limited in embodiments of this application. For a possible implementation, refer to FIG. 3. FIG. 3 is a diagram of RTM processing according to an embodiment of this application. As shown in FIG. 3, the RTM and a CPU cluster may be coupled in a same CPU subchip. The CPU cluster includes N processor cores (CORE 0 to CORE N). For each processor core, for example, CORE 0, the processor core includes a level 2 cache (Level 2 Cache, L2C), a counter (Counter Reg), a snapshot (Snap Shot Reg), and parallel to serial (Parallel to serial, P2S) conversion. The processor core processes one or more processes. In FIG. 3, only two processes in CORE 0 are used as an example for descriptions. Specifically, a process 0 and a process 1 are included. For each process, for example, the process 0, including one or more threads, multiple counters and snapshots monitor and record M pieces of performance monitoring information generated when CORE 0 executes a thread. The RTM may include an event generation and trace generator. The event generation and trace generator in the RTM may extract one or more pieces of status information about a type of a thread from the M pieces of performance monitoring information, and may further extract an ID, an ASID, and an exception level (Exception Level) of a corresponding thread.

The type of the thread may include a front-end-bound type, a compute-bound type, a memory-bound type, and the like. The one or more pieces of status information correspond to the type of the thread. For example, if the type of the thread is a branching type, the RTM may extract performance monitoring information of a branch prediction unit of the corresponding processor core from the M pieces of performance monitoring information corresponding to the thread; for example, if the type of the thread is a computation type, the RTM may extract period monitoring information of a computation unit of the corresponding processor core from the M pieces of performance monitoring information corresponding to the thread; or for example, if the type of the thread is a memory access type, the RTM may extract information of various hierarchies of caches and an external memory of the corresponding processor core from the M pieces of performance monitoring information corresponding to the thread.

Optionally, the RTM may include a register, and the register is configured to store one or more pieces of status information corresponding to each thread.

A control unit is configured to obtain, from the register in the RTM, the one or more pieces of status information corresponding to each thread executed by each processor core, and optionally, may further obtain identifier (Identifier, ID) information of each thread and ID information of a processor core corresponding to the thread. Optionally, the control unit may periodically obtain, from the register in the RTM, the one or more pieces of status information corresponding to each thread executed by each processor core. A periodical frequency may be preset, for example, once every millisecond or once every microsecond. It may be understood that a higher periodical frequency indicates higher precision in which the control unit obtains the one or more pieces of status information. Optionally, after the control unit obtains, from the register in the RTM, the one or more pieces of status information corresponding to each thread executed by each processor core, the control unit may further classify all threads, classify all the threads into types such as FE bound, compute bound, and memory bound, and set different calculation rules based on different types of threads.

After the control unit obtains the one or more pieces of status information corresponding to each thread, the control unit may determine, according to a preset calculation rule and the one or more pieces of status information corresponding to each thread, a performance indicator corresponding to each thread. It is assumed that the multiple pieces of status information include a CNT1 and a CNT2, and the preset calculation rule is a ratio, it may be determined that the performance indicator corresponding to the thread is CNT1/CNT2.

After the control unit obtains the performance indicator corresponding to the thread, the control unit adjusts a QoS priority of the at least one of the N processor cores based on the performance indicator. A specific adjustment manner may include the following several manners.

### Manner 1:

When the performance indicator is greater than or equal to a first threshold, the control unit may increase a QoS priority of the processor core corresponding to the performance indicator. Specifically, the QoS priority of the processor core corresponding to the performance indicator may be adjusted from a first QoS priority to a second QoS priority, and the second QoS priority is higher than the first QoS priority.

Optionally, when the performance indicator is less than the first threshold, the control unit may reduce the QoS priority of the processor core corresponding to the performance indicator. Specifically, the control unit may adjust the QoS priority of the processor core corresponding to the performance indicator from the second QoS priority to the first QoS priority; or may adjust the QoS priority of the processor core corresponding to the performance indicator from the second QoS priority to another QoS priority, where the another QoS priority is lower than the second QoS priority, and may be higher than the first QoS priority, or may be lower than the first QoS priority.

In this manner, by adjusting the QoS priorities of the processor cores, the control unit may control priorities of sending task request messages of the N processor cores, so that a resource requirement of the processor cores for executing a critical task can be preferentially met.

### Manner 2:

The shared cache unit, configured to store one or more threads of each processor core.

The control unit is specifically configured to: when the performance indicator is greater than or equal to a first threshold, send a first signal to a priority mapping circuit in the shared cache unit, where the first signal indicates to adjust a QoS priority of a thread corresponding to the performance indicator from a first QoS priority to a second QoS priority.

Optionally, when the performance indicator is less than the first threshold, the control unit may send a third signal to the priority mapping circuit in the shared cache unit, where the third signal indicates to adjust the QoS priority of the thread corresponding to the performance indicator from the second QoS priority to the first QoS priority.

In this manner, by adjusting the QoS priority of the thread, the control unit may control an execution sequence of the multiple threads in the shared cache unit, so that a resource requirement of a thread corresponding to execution of a critical task can be preferentially met. For example, a real-time thread is preferentially met.

In a possible implementation, the control unit may be further configured to: obtain, based on the adjusted second QoS priority, one or more pieces of new status information corresponding to each thread from the RTM, determine performance indicator corresponding to each thread based on the one or more pieces of new status information and a preset calculation rule, and after the control unit obtains the performance indicator corresponding to the thread, adjust bandwidths of some or all of the N processor cores based on the performance indicator. A specific adjustment manner may be: when the performance indicator is greater than or equal to a second threshold, sending a second signal to a limiting unit of the processor core for a thread corresponding to the performance indicator, where the second signal is used to adjust a bandwidth of the processor core that executes the thread corresponding to the performance indicator from a first bandwidth to a second bandwidth, the second bandwidth is greater than the first bandwidth, and the second threshold is greater than the first threshold. Optionally, the second signal may include limiting duration (duration) and a limiting duty ratio (duty).

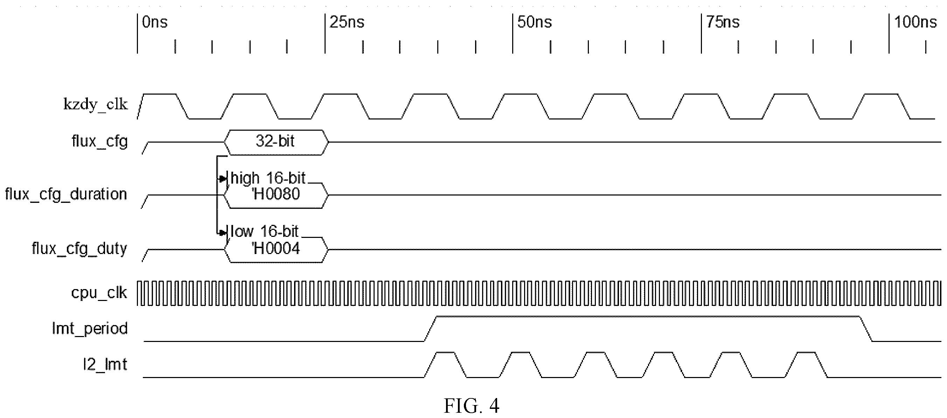

Specifically, the control unit interacts with the limiting unit of the processor core, and may cooperate with the current limiting manner of a processor core L2, to implement flexible and configurable current limiting based on a bandwidth proportion, to avoid over-limitation. FIG. 4 is a diagram of responding to a limiting signal by a processor core according to an embodiment of this application. As shown in FIG. 4, kzdy_clk indicates a clock signal of a control unit, and cpu_clk indicates a clock signal of the processor core. After a limiting unit of the processor core receives a second signal (flux_cfg), the limiting unit of the processor core may perform spreading based on a configuration of limiting duration (flux_cfg_duration). For example, lmt_period in the figure indicates that limiting is performed in this area, that is, a first bandwidth is adjusted to a second bandwidth. The limiting unit can limit a bandwidth ratio based on a limiting duty ratio (flux_cfg_duty), for example, l2_lmt in the figure. When l2_lmt is valid, an L2 bandwidth is limited.

Optionally, when a performance indicator is greater than or equal to a third threshold, the control unit may configure a stricter limiting strategy for a limiting unit of a corresponding processor core, for example, increase the limiting duration or the limiting duty ratio. Specifically, the control unit may send a fifth signal to a limiting unit of a processor core for a thread corresponding to the performance indicator, where the fifth signal is used to adjust a bandwidth of the processor core that executes the thread corresponding to the performance indicator from the second bandwidth to a third bandwidth, the third bandwidth is greater than the second bandwidth, and the third threshold is greater than the second threshold. Optionally, the fifth signal may include new limiting duration (duration) and a new limiting duty ratio (duty).

Optionally, the control unit is further configured to: when the performance indicator is less than the second threshold, send a fourth signal to the limiting unit of the processor core for the thread corresponding to the performance indicator, where the fourth signal is used to adjust the bandwidth of the processor core that executes the thread corresponding to the performance indicator from the second bandwidth to the first bandwidth; or adjust the bandwidth of the processor core for the thread corresponding to the performance indicator from the second bandwidth to another bandwidth, where the another bandwidth may be less than the second bandwidth, may be greater than the first bandwidth, or may be less than the first bandwidth.

In a possible implementation, when the performance indicator is greater than or equal to the first threshold, the control unit may maintain a QoS priority of the processor core corresponding to the performance indicator, and reduce a QoS priority of a processor core other than the processor core.

In a possible implementation, when the performance indicator is greater than or equal to the first threshold, the control unit may determine a processor core with greatest interference in a processor core other than the processor core, and reduce a QoS priority of the processor core with greatest interference.

In a possible implementation, when the performance indicator is greater than or equal to the first threshold, the control unit may send a sixth signal to a priority mapping circuit in a shared cache unit, where the sixth signal indicates to reduce a QoS priority of a thread other than the thread corresponding to the performance indicator.

In a possible implementation, when the performance indicator is greater than or equal to the second threshold, the control unit may maintain the bandwidth of the processor core corresponding to the performance indicator, and reduce a bandwidth of a processor core other than the processor core.

In a possible implementation, when the control apparatus further includes another processing unit, for example, the control apparatus may further include processors such as a graphics processing unit (Graphics Processing Unit, GPU), a network processor (Neural-network Processing Units, NPU), an image signal processor (Image Signal Processing, ISP), a digital signal processor (Digital Signal Processing, DSP), a field programmable gate array (Field Programmable Gate Array, FPGA), or a network processor. When the performance indicator is greater than or equal to the first threshold, the control unit may be configured to: improve resource allocation of N processor cores as a whole, for example, QoS priorities of all the processor cores are "+1", or bandwidths of all the processor cores are increased; and correspondingly, reduce resource allocation of a processor other than the processor core in the apparatus.

In a possible implementation, the control unit may use different control strategies for different processor cores or different threads. For example, in a homogeneous 8-core system, priorities or bandwidths of two cores may be controlled to be higher than those of other cores, and multiple heterogeneous core behaviors may be implemented in the homogeneous system. A heterogeneous core behavior can be implemented in a software manner, so that a system architecture can be more flexible and controllable. In an embodiment, for example, in an Internet of Vehicles scenario, there is a high requirement on real-time performance for a system. For example, in a 10-core CPU system, two cores may be independently used as a real-time system (RTOS), and a control strategy may be adjusted based on real-time status information of the two cores, and a latency (latency) requirement of the two cores may be implemented by using the control unit.

In this embodiment of this application, differentiated resource allocation can be implemented in the homogeneous CPU system, and the heterogeneous core behavior can be implemented. In a heterogeneous CPU system, because performance of CPUs is different, it is difficult to allocate a task process, and resource allocation of each core may be dynamically adjusted by monitoring performance status information in real time. For example, in the multi-core synchronization scenario and multi-core exclusion scenario, laggard threads are identified to improve execution performance of the CPU. Different from the CPU frequency increase, bandwidths of the CPU are allocated to improve effect and reduce power consumption.

Optionally, the foregoing control unit is described by using only a QoS priority corresponding to a control thread and a QoS priority or a bandwidth of a corresponding processor core as an example. It may be understood that the control unit may further control a cache, a frequency, a quantity of prefetched data, or the like of a corresponding processor core, and execution strategies that can implement same functions also falls within the protection scope of this application.

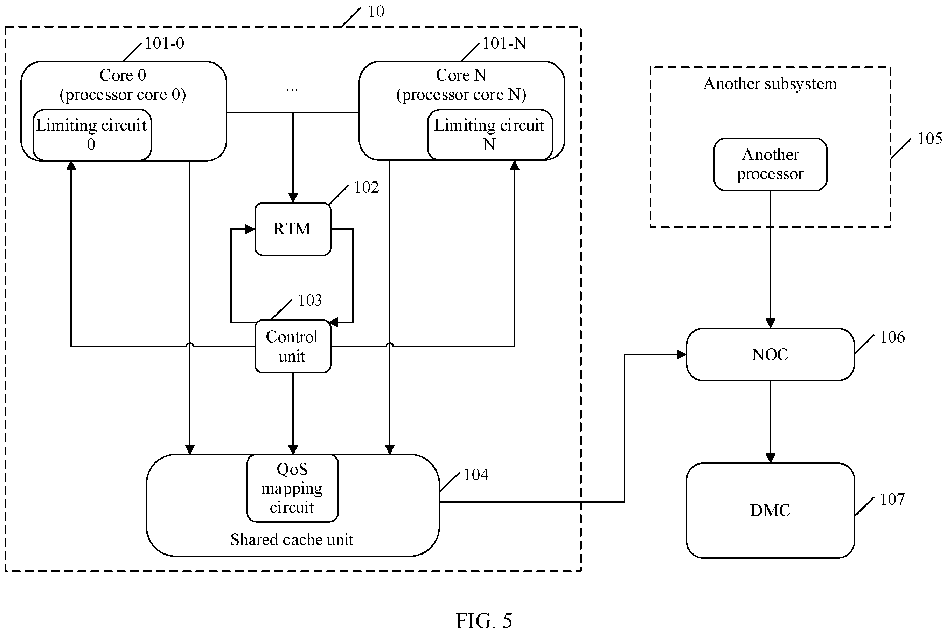

FIG. 5 is a diagram of a structure of a system architecture according to an embodiment of this application. As shown in FIG. 5, the system architecture includes a control apparatus 10 and another subsystem 105, a network on a chip (Network on a Chip, NOC) 106, and a digital micro circuit (Digital Micro Circuit, DMC). The another subsystem 105 may include another processor, for example, another memory access request initiation module, for example, another key module in a SOC, for example, a GPU, an NPU, an ISP, or a DSP. The NOC 106 may be coupled to a shared cache unit 104. The NOC is configured to execute a thread of each of N processor cores 101.

In this embodiment of this application, a control unit can more flexibly control resources of all processor cores in real time. An RTM extracts one or more pieces of status information of a thread executed by each of N processor cores in real time, and uses the thread as a granularity, so that accuracy of controlling resources of each processor core in real time can be improved, better system resource allocation can be achieved, and performance losses of a multi-core processor can be reduced.

The control apparatus in embodiments of this application may be widely applied to various fields such as consumer electronic products such as a high-performance computer, a desktop computer, and an intelligent terminal, and equipment manufacturing.

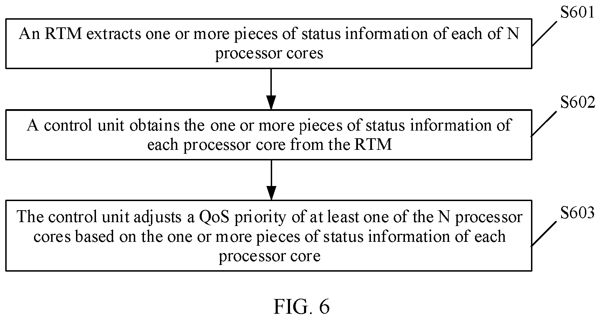

FIG. 6 is a schematic flowchart of a control method according to an embodiment of this application. The control method is applied to a control apparatus. The control apparatus includes an RTM and a control unit. The control apparatus may be coupled to N processor cores. The control method is applicable to any one of the control apparatuses in FIG. 1 to FIG. 5 and a device including the control apparatus (for example, a mobile phone, a computer, or a server). The method may include the following steps S601 to step S603.

Step S601: The RTM extracts one or more pieces of status information of each of the N processor cores. The one or more pieces of status information represent a performance status of a corresponding processor core executing a thread, and the one or more pieces of status information correspond to a type of the thread.

Step S602: The control unit obtains the one or more pieces of status information of each processor core from the RTM.

Step S603: The control unit adjusts a QoS priority of at least one of the N processor cores based on the one or more pieces of status information of each processor core.

In a possible implementation, the method further includes: The control unit adjusts bandwidths of some or all of the N processor cores based on an adjusted QoS priority.

It should be noted that for a specific procedure of the control method described in this embodiment of this application, refer to related descriptions in the foregoing embodiments of this application described in FIG. 1 to FIG. 5. Details are not described herein again.

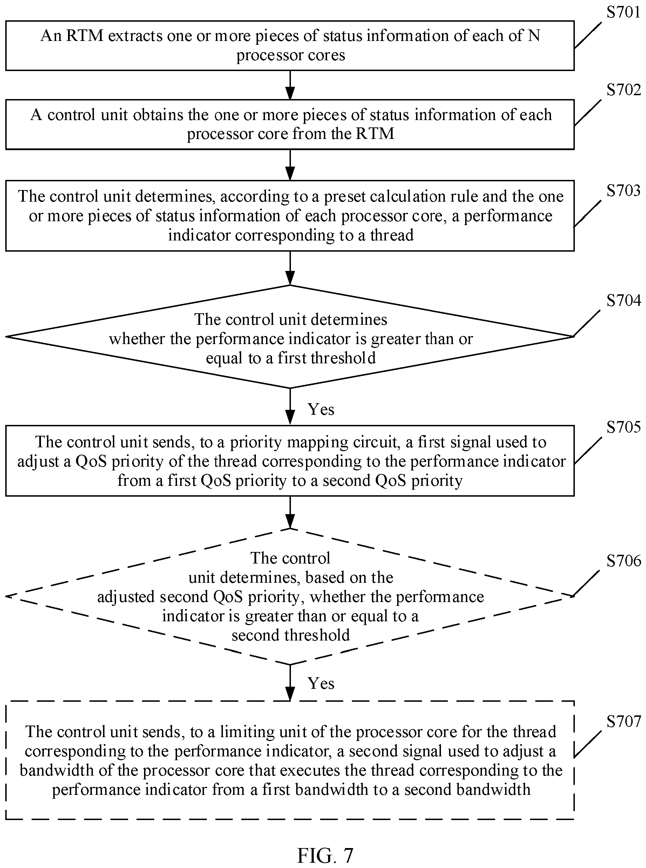

FIG. 7 is a schematic flowchart of a control method according to an embodiment of this application. FIG. 7 is an optimized flowchart of FIG. 6. The control method is applied to a control apparatus. The control apparatus includes an RTM, a control unit, and a shared cache unit. The control apparatus is coupled to N processor cores, each processor core includes a limiting unit, the RTM includes a register, and the shared cache unit includes a priority mapping circuit. The control method is applicable to any one of the control apparatuses in FIG. 1 to FIG. 5 and a device including the control apparatus (for example, a mobile phone, a computer, or a server). The method may include the following steps S701 to step S707. Steps S706 and S707 are optional steps.

Step S701: The RTM extracts one or more pieces of status information of each of the N processor cores. The one or more pieces of status information represent a performance status of a corresponding processor core executing a thread, and the one or more pieces of status information correspond to a type of the thread.

Step S702: The control unit obtains the one or more pieces of status information of each processor core from the RTM. Specifically, the control unit obtains the one or more pieces of status information of the corresponding processor core from the register in the RTM.

Step S703: The control unit determines, according to a preset calculation rule and the one or more pieces of status information of each processor core, a performance indicator corresponding to the thread.

In a possible implementation, the control unit adjusts a QoS priority of at least one of the N processor cores based on the performance indicator.

Step S704: The control unit determines whether the performance indicator is greater than or equal to a first threshold, and if the performance indicator is greater than or equal to the first threshold, performs step S705.

Step S705: The control unit sends, to the priority mapping circuit, a first signal used to adjust a QoS priority of the thread corresponding to the performance indicator from a first QoS priority to a second QoS priority.

In a possible implementation, the method further includes: The shared cache unit stores one or more threads of each processor core. That the control unit adjusts the QoS priority of at least one of the N processor cores includes: When the performance indicator is greater than or equal to the first threshold, the control unit sends the first signal to the priority mapping circuit, where the first signal is used to adjust the QoS priority of the thread corresponding to the performance indicator from the first QoS priority to the second QoS priority, and the second QoS priority is higher than the first QoS priority.

Step S706: The control unit determines, based on the adjusted second QoS priority, whether a performance indicator is greater than or equal to a second threshold, and if the performance indicator is greater than or equal to the second threshold, performs step S707.

Step S707: The control unit sends, to a limiting unit of a processor core for a thread corresponding to the performance indicator, a second signal used to adjust a bandwidth of the processor core that executes the thread corresponding to the performance indicator from a first bandwidth to a second bandwidth.

In a possible implementation, each processor core includes the limiting unit. The method further includes: When a performance indicator is greater than or equal to the second threshold, the control unit sends, based on the adjusted second QoS priority, the second signal to a limiting unit of a processor core for a thread corresponding to the performance indicator, where the second signal is used to adjust the bandwidth of the processor core that executes the thread corresponding to the performance indicator from the first bandwidth to the second bandwidth, the second bandwidth is greater than the first bandwidth, the second signal includes limiting duration and a limiting duty ratio, and the second threshold is greater than the first threshold.

In a possible implementation, that the RTM extracts the one or more pieces of status information of each of the N processor cores includes: The RTM determines M pieces of performance monitoring information of the corresponding processor core, where the M pieces of performance monitoring information represent the performance status of the corresponding processor core executing the thread, and M is an integer greater than or equal to 1; and extracts the one or more pieces of status information from the M pieces of performance monitoring information according to a detection strategy. The method further includes: The register stores the one or more pieces of status information.

In a possible implementation, the type of the thread includes a front-end-bound type, a compute-bound type, and a memory-bound type; and that the RTM extracts the one or more pieces of status information from the M pieces of performance monitoring information according to the detection strategy includes: For a thread of a branching type, the RTM extracts performance monitoring information of a branch prediction unit of the corresponding processor core from the M pieces of performance monitoring information; or for a thread of a computation type, the RTM extracts period monitoring information of a computation unit of the corresponding processor core from the M pieces of performance monitoring information; or for a thread of a memory access type, the RTM extracts information of various hierarchies of caches and an external memory of the corresponding processor core from the M pieces of performance monitoring information.

In a possible implementation, the method further includes: When the performance indicator is less than the first threshold, the control unit sends a third signal to the priority mapping circuit, where the third signal is used to adjust the QoS priority of the thread corresponding to the performance indicator from the second QoS priority to the first QoS priority.

In a possible implementation, the method further includes: When the performance indicator is less than the second threshold, the control unit sends a fourth signal to the limiting unit of the processor core for the thread corresponding to the performance indicator, where the fourth signal is used to adjust the bandwidth of the processor core that executes the thread corresponding to the performance indicator from the second bandwidth to the first bandwidth.

It should be noted that for a specific procedure of the control method described in this embodiment of this application, refer to related descriptions in the foregoing embodiments of this application described in FIG. 1 to FIG. 5. Details are not described herein again. It may be understood that the control method in embodiments of this application is not limited to processor-related logic control, and may be further applicable to other fields such as router control and a forwarding logic chip, in which multiple masters may play different functions in different systems in different products and different scenarios based on features. This is not limited in embodiments of this application.

An embodiment of this application further provides a computer-readable storage medium. The computer-readable storage medium may store a program. When the program is executed by a control apparatus, some or all of the steps in any implementation recoded in the foregoing method embodiments are performed.

An embodiment of this application further provides a computer program, where the computer program includes instructions. When the computer program is executed by a multi-core processor, the control apparatus may be enabled to perform some or all of steps in any control method.

In the foregoing embodiments, descriptions of each embodiment have respective focuses. For a part that is not described in detail in an embodiment, refer to related descriptions in other embodiments.

It should be noted that, for brief descriptions, the foregoing method embodiments are represented as a series of action combinations. However, persons skilled in the art should understand that this application is not limited to the described action order, because some steps may be performed in other orders or simultaneously according to this application. It should be further appreciated by persons skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiments are only examples. For example, division into the units is only logical function division and may be other division in an actual implementation. For example, multiple units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, in other words, may be located in one position, or may be distributed on multiple network elements. Some or all of the units may be selected based on actual requirements to achieve the objectives of the solutions in embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a computer device (which may be a personal computer, a server, or a network device, and may specifically be a processor in a computer device) to perform all or some of the steps of the methods described in embodiments of this application. The foregoing storage medium includes any medium that can store program code, for example, a USB flash drive, a removable hard disk, a magnetic disk, an optical disc, a read-only memory (Read-Only Memory, ROM for short), or a random access memory (Random Access Memory, RAM for short).

The foregoing embodiments are only intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A control apparatus, comprising a real-time monitor RTM and a control unit, wherein the control apparatus is coupled to N processor cores, and N is an integer greater than or equal to 1;
the RTM is configured to extract one or more pieces of status information of each of the N processor cores, the one or more pieces of status information represent a performance status of a corresponding processor core executing a thread, and the one or more pieces of status information correspond to a type of the thread; and
the control unit is configured to:
obtain the one or more pieces of status information of each processor core from the RTM; and
adjust a quality of service (QoS) priority of at least one of the N processor cores based on the one or more pieces of status information of each processor core.

2. The apparatus according to claim 1, wherein the control unit is further configured to:
adjust bandwidths of some or all of the N processor cores based on an adjusted QoS priority.

3. The apparatus according to claim 1, wherein the RTM is specifically configured to:
determine M pieces of performance monitoring information of the corresponding processor core, wherein the M pieces of performance monitoring information represent the performance status of the corresponding processor core executing the thread, and M is an integer greater than or equal to 1; and
extract the one or more pieces of status information from the M pieces of performance monitoring information according to a detection strategy; and
the RTM comprises a register, wherein
the register is configured to store the one or more pieces of status information.

4. The apparatus according to claim 3, wherein the type of the thread comprises a front-end-bound type, a compute-bound type, and a memory-bound type, and the RTM is specifically configured to:
for a thread of a branching type, extract performance monitoring information of a branch prediction unit of the corresponding processor core from the M pieces of performance monitoring information; or
for a thread of a computation type, extract period monitoring information of a computation unit of the corresponding processor core from the M pieces of performance monitoring information; or
for a thread of a memory access type, extract information of various hierarchies of caches and an external memory of the corresponding processor core from the M pieces of performance monitoring information.

5. The apparatus according to claim 3 or 4, wherein the control unit is specifically configured to:
obtain the one or more pieces of status information of the corresponding processor core from the register;
determine, according to a preset calculation rule and the one or more pieces of status information, a performance indicator corresponding to the thread; and
adjust the QoS priority of the at least one of the N processor cores based on the performance indicator.

6. The apparatus according to claim 5, wherein the apparatus further comprises a shared cache unit, and the shared cache unit comprises a priority mapping circuit;
the shared cache unit is configured to store one or more threads of each processor core; and
the control unit is specifically configured to: when the performance indicator is greater than or equal to a first threshold, send a first signal to the priority mapping circuit, wherein the first signal is used to adjust a QoS priority of the thread corresponding to the performance indicator from a first QoS priority to a second QoS priority, and the second QoS priority is higher than the first QoS priority.

7. The apparatus according to claim 6, wherein each processor core comprises a limiting unit; and the control unit is specifically configured to:
when a performance indicator is greater than or equal to a second threshold, send, based on the adjusted second QoS priority, a second signal to a limiting unit of a processor core for a thread corresponding to the performance indicator, wherein the second signal is used to adjust a bandwidth of the processor core that executes the thread corresponding to the performance indicator from a first bandwidth to a second bandwidth, the second bandwidth is greater than the first bandwidth, the second signal comprises limiting duration and a limiting duty ratio, and the second threshold is greater than the first threshold.

8. The apparatus according to claim 6, wherein the control unit is further configured to:
when the performance indicator is less than the first threshold, send a third signal to the priority mapping circuit, wherein the third signal is used to adjust the QoS priority of the thread corresponding to the performance indicator from the second QoS priority to the first QoS priority.

9. The apparatus according to claim 7, wherein the control unit is further configured to:
when the performance indicator is less than the second threshold, send a fourth signal to the limiting unit of the processor core for the thread corresponding to the performance indicator, wherein the fourth signal is used to adjust the bandwidth of the processor core that executes the thread corresponding to the performance indicator from the second bandwidth to the first bandwidth.

10. A control method, applied to a control apparatus, wherein the control apparatus comprises a real-time monitor RTM and a control unit, the control apparatus is coupled to N processing cores, and N is an integer greater than or equal to 1; and the method comprises:
extracting, by the RTM, one or more pieces of status information of each of the N processor cores, wherein the one or more pieces of status information represent a performance status of a corresponding processor core executing a thread, and the one or more pieces of status information correspond to a type of the thread; and
obtaining, by the control unit, the one or more pieces of status information of each processor core from the RTM; and adjusting, based on the one or more pieces of status information of each processor core, a quality of service (QoS) priority of at least one of the N processor cores.

11. The method according to claim 10, wherein the method further comprises:
adjusting, by the control unit, bandwidths of some or all of the N processor cores based on an adjusted QoS priority.

12. The method according to claim 10, wherein the extracting, by the RTM, one or more pieces of status information of each of the N processor cores comprises:
determining, by the RTM, M pieces of performance monitoring information of the corresponding processor core, wherein the M pieces of performance monitoring information represent the performance status of the corresponding processor core executing the thread, and M is an integer greater than or equal to 1; and extracting the one or more pieces of status information from the M pieces of performance monitoring information according to a detection strategy; and
the RTM comprises a register; and the method further comprises:
storing, by the register, the one or more pieces of status information.

13. The method according to claim 12, wherein the type of the thread comprises a front-end-bound type, a compute-bound type, and a memory-bound type; and
the extracting, by the RTM, the one or more pieces of status information from the M pieces of performance monitoring information according to a detection strategy comprises:
for a thread of a branching type, extracting, by the RTM, performance monitoring information of a branch prediction unit of the corresponding processor core from the M pieces of performance monitoring information; or
for a thread of a computation type, extracting, by the RTM, period monitoring information of a computation unit of the corresponding processor core from the M pieces of performance monitoring information; or
for a thread of a memory access type, extracting, by the RTM, information of various hierarchies of caches and an external memory of the corresponding processor core from the M pieces of performance monitoring information.

14. The method according to claim 12 or 13, wherein the method further comprises:
obtaining, by the control unit, the one or more pieces of status information of the corresponding processor core from the register;
determining, by the control unit, according to a preset calculation rule and the one or more pieces of status information, a performance indicator corresponding to the thread; and
adjusting, by the control unit, the QoS priority of the at least one of the N processor cores based on the performance indicator.

15. The method according to claim 14, wherein the apparatus further comprises a shared cache unit, the shared cache unit comprises a priority mapping circuit, and the method further comprises:
storing, by the shared cache unit, one or more threads of each processor core;
the adjusting, by the control unit, the QoS priority of the at least one of the N processor cores comprises:
when the performance indicator is greater than or equal to a first threshold, sending, by the control unit, a first signal to the priority mapping circuit, wherein the first signal is used to adjust a QoS priority of the thread corresponding to the performance indicator from a first QoS priority to a second QoS priority, and the second QoS priority is higher than the first QoS priority.

16. The method according to claim 15, wherein each processor core comprises a limiting unit, and the method further comprises:
when a performance indicator is greater than or equal to a second threshold, sending, by the control unit based on the adjusted second QoS priority, a second signal to a limiting unit of a processor core for a thread corresponding to the performance indicator, wherein the second signal is used to adjust a bandwidth of a processor core that executes the thread corresponding to the performance indicator from a first bandwidth to a second bandwidth, the second bandwidth is greater than the first bandwidth, the second signal comprises limiting duration and a limiting duty ratio, and the second threshold is greater than the first threshold.

17. The method according to claim 15, wherein the method further comprises:
when the performance indicator is less than the first threshold, sending, by the control unit, a third signal to the priority mapping circuit, wherein the third signal is used to adjust the QoS priority of the thread corresponding to the performance indicator from the second QoS priority to the first QoS priority.

18. The method according to claim 16, wherein the method further comprises:
when the performance indicator is less than the second threshold, sending, by the control unit, a fourth signal to the limiting unit of the processor core for the thread corresponding to the performance indicator, wherein the fourth signal is used to adjust the bandwidth of the processor core that executes the thread corresponding to the performance indicator from the second bandwidth to the first bandwidth.

19. A computer-readable storage medium, wherein the computer-readable storage medium stores a computer program, and when the computer program is executed by a control apparatus, the method according to any one of claims 10 to 18 is implemented.

20. A computer program, wherein the computer-readable program comprises instructions, and when the computer program is executed by a control apparatus, the control apparatus is enabled to perform the method according to any one of claims 10 to 18.
